# FASCICULE DE BREVET EUROPEEN

(11) **EP 0 774 174 B1**
(45) Date de publication et mention de la délivrance du brevet: **07.01.1999**
(21) Numéro de dépôt: 95927757.5
(22) Date de dépôt: 04.08.1995
(51) Int. Cl.: H02K 49/10, G01F 1/075

(54) **DISPOSITIF DE PROTECTION MAGNETIQUE**
VORRICHTUNG ZUM MAGNETISCHEM SCHUTZ
DEVICE AFFORDING MAGNETIC PROTECTION

(30) Priorité: 23.08.1994 FR 9410200
(43) Date de publication de la demande: 21.05.1997
(73) Titulaire: SCHLUMBERGER INDUSTRIES S.A., 92120 Montrouge (FR)
(72) Inventeur: HAUDEBERT, Lionel, F-71000 Sancé (FR); FREUND, Marcel, F-01290 Grièges (FR)
(86) Numéro de dépôt international: FR9501052
(87) Numéro de publication internationale: WO9606480

(56) Documents cités:
- DE-A- 3 415 366
- US-A- 3 643 120
- US-A- 4 598 583

## Description

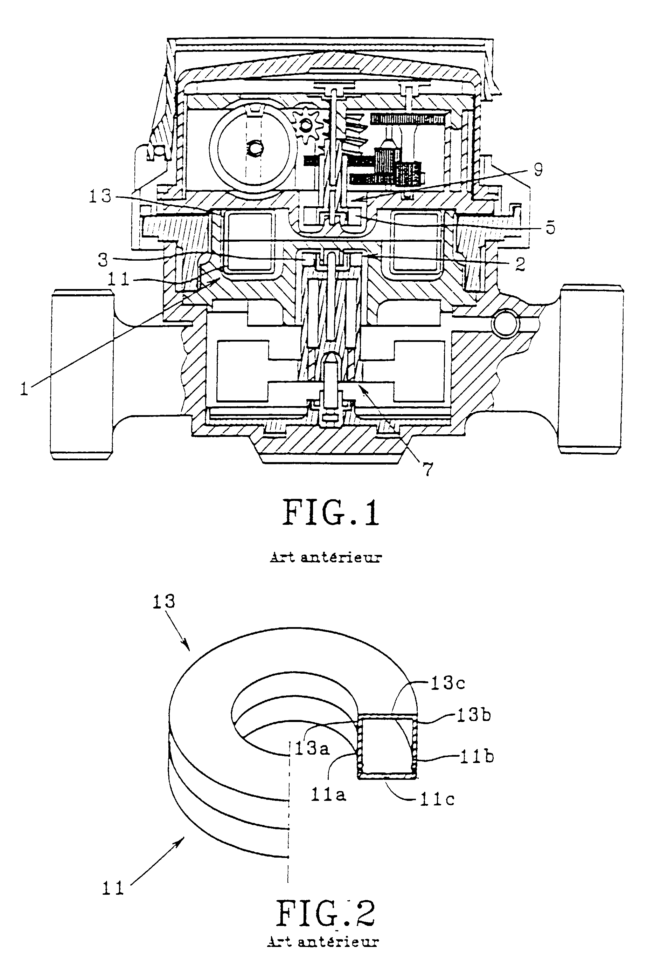

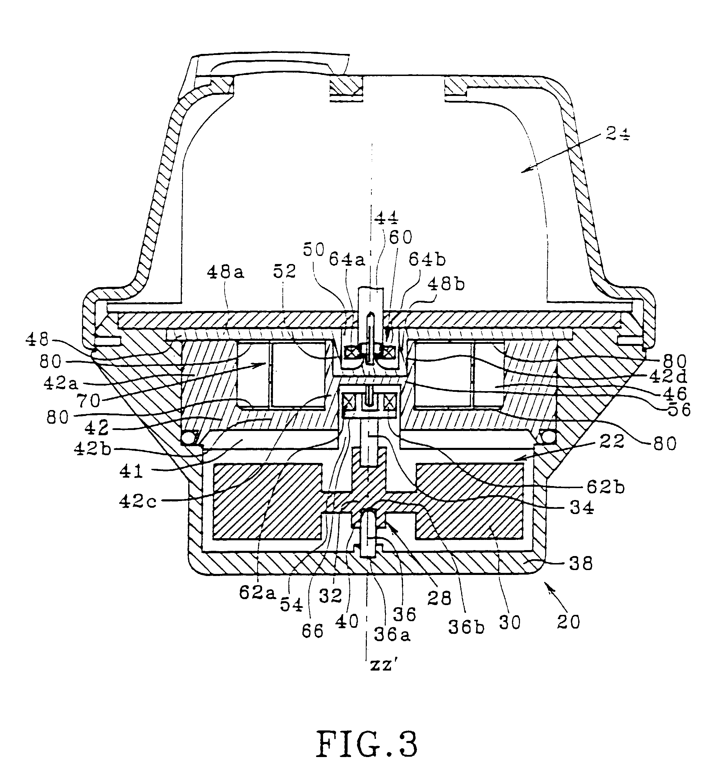

La présente invention est relative à un dispositif de protection contre un champ magnétique extérieur d'un système d'entraînement en rotation autour d'un axe de deux organes mécaniques par accouplement magnétique.
On connaît des systèmes d'entraînement en rotation autour d'un axe de deux organes mécaniques par accouplement magnétique qui comprennent au moins deux éléments aimantés solidaires chacun d'un desdits organes mécaniques. L'un des éléments aimantés constitue la partie menante et l'autre élément aimanté constitue la partie menée du système d'entraînement. Ces éléments aimantés possèdent une aimantation de direction axiale et sont destinés à interagir l'un avec l'autre afin que la mise en rotation de l'un des organes mécaniques soit transmise à l'autre organe mécanique par l'intermédiaire du système d'entraînement précédemment décrit.
La Demanderesse s'est aperçue que si ces systèmes d'entraînement par accouplement magnétique se trouvent en présence d'un champ magnétique et plus particulièrement d'un gradient de champ magnétique, lesdits systèmes d'entraînement peuvent être perturbés et l'on peut par exemple assister à un "décrochage magnétique" entre les parties menantes et les parties menées des systèmes d'entraînement.
Dans le domaine du comptage de fluide, il est par exemple connu d'après le modèle d'utilité brésilien 91BR-100684 de prévoir un dispositif de protection magnétique 1 qui entoure un système d'entraînement 2 par accouplement magnétique dans un compteur d'eau tel que représenté sur la figure 1.
Le système d'entraînement se compose de deux couronnes 3, 5 aimantées axialement et disposées face à face le long d'un axe imaginaire passant par l'axe de la turbine 7 et par l'arbre 9 relié au totalisateur. Ce dispositif de protection est formé de deux pièces 11, 13 en matériau magnétique symétriques par rapport au plan horizontal médian P passant entre les couronnes aimantées 3, 5. Comme représenté sur la figure 2, chaque pièce 11 (resp. 13) comprend deux portions cylindriques 11a, 11b (resp. 13a, 13b) parallèles à l'axe imaginaire, de même extension axiale ou hauteur et réunies à une de leurs extrémités axiales par une troisième portion 11c (resp. 13c) annulaire radiale conférant ainsi à chaque pièce une forme en U dans une section contenant l'axe imaginaire.
Le dispositif de protection 1 est obtenu en réunissant les deux pièces en matériau magnétique ce qui procure audit dispositif une forme de tore dont la section est approximativement rectangulaire.
Lorsque ce dispositif de protection magnétique 1 est implanté dans le compteur d'eau, il est placé autour des couronnes aimantées 3 et 5 et son extension axiale ou sa hauteur correspond à celle du système d'entraînement magnétique.
Un tel dispositif de protection canalise les lignes de champ provenant d'un champ magnétique extérieur au compteur d'eau et, de ce fait, le champ magnétique extérieur est fortement réduit dans la zone intérieure aux pièces 11, 13 en matériau magnétique et dans laquelle sont situées les couronnes aimantées 3, 5.
Cependant, la Demanderesse s'est aperçue qu'en présence d'un champ magnétique extérieur, un gradient de champ magnétique est créé au voisinage des extrémités axiales de la zone intérieure aux pièces 11 et 13 dans laquelle sont situées les couronnes 3 et 5, et ce gradient peut entraver le fonctionnement du système d'entraînement par accouplement magnétique.
La Demanderesse a en outre pu constater qu'en augmentant le diamètre intérieur des pièces 11, 13, la zone précitée où le champ magnétique dû au champ magnétique extérieur est quasiment nul se trouve réduite.
L'efficacité d'un tel dispositif de protection repose donc sur sa proximité vis-à-vis des couronnes aimantées.
Pour certains types de compteurs, cette proximité peut engendrer des interactions magnétiques entre les couronnes aimantées et les pièces en matériau magnétique.
La présente invention vise à remédier aux inconvénients de l'art antérieur en proposant un dispositif de protection contre un champ magnétique extérieur d'un système d'entraînement en rotation autour d'un axe de deux organes mécaniques par accouplement magnétique qui soit simple à réaliser et qui permette de réduire le gradient dudit champ magnétique au droit dudit système d'entraînement.
La présente invention a ainsi pour objet un dispositif de protection contre un champ magnétique extérieur d'un système d'entraînement en rotation autour d'un axe de deux organes mécaniques par accouplement magnétique, ledit système d'entraînement comportant au moins deux éléments aimantés axialement, solidaires chacun d'un desdits organes mécaniques et destinés à interagir l'un avec l'autre, lesdits éléments aimantés étant décalés axialement, ledit dispositif comprenant deux pièces en matériau magnétique entourant ledit système d'entraînement, chacune desdites pièces ayant une extension radiale minimale supérieure à l'extension radiale desdits éléments aimantés, caractérisé en ce que les deux pièces en matériau magnétique ménagent entre elles un espace axial afin de réduire le gradient de champ magnétique extérieur au droit du système d'entraînement et ont une extension axiale telle qu'elles encadrent axialement ledit système d'entraînement.

Cette caractéristique permet en effet non seulement de réduire l'intensité du champ magnétique extérieur au droit du système d'entraînement mais de rendre ce champ le plus homogène possible dans la zone où se situe le système d'entraînement par accouplement magnétique.
Ce dispositif de protection permet également de limiter les fuites du champ magnétique créé par le système d'entraînement par accouplement magnétique.
Selon une caractéristique de l'invention, les pièces en matériau magnétique sont situées à une distance des éléments aimantés du système d'entraînement telle que ceux-ci créent au droit desdites pièces un champ magnétique d'intensité inférieure à 10⁻³Tesla.
Toutefois, certains types de compteurs, notamment des compteurs volumétriques, peuvent tolérer des interactions magnétiques plus importantes entre le dispositif de protection magnétique et le système d'entraînement.
Cette caractéristique est particulièrement avantageuse dans les compteurs d'eau où elle permet de rendre négligeable toute interaction magnétique entre le dispositif de protection et le système d'entraînement.
Chaque pièce en matériau magnétique présente une symétrie de révolution axiale.

Selon d'autres caractéristiques de l'invention:
- au moins une des pièces en matériau magnétique a une forme de couronne hémisphérique,
- au moins une des pièces en matériau magnétique comporte, d'une part, une première portion de forme cylindrique s'étendant axialement et, d'autre part, une deuxième portion annulaire s'étendant radialement en direction du système d'entraînement à partir d'une extrémité axiale de ladite première portion qui est la plus éloignée de l'espace axial,
- au moins une des pièces en matériau magnétique comprend deux portions cylindriques parallèles s'étendant axialement et une troisième portion annulaire radiale réunissant lesdites portions cylindriques par une de leurs extrémités la plus éloignée de l'espace axial,
- les deux pièces en matériau magnétique sont différentes l'une de l'autre,
- les deux pièces en matériau magnétique sont identiques,
- le système d'entraînement par accouplement magnétique est de type attractif,
- le système d'entraînement par accouplement magnétique est de type répulsif,
- le système d'entraînement par accouplement magnétique comporte deux couples d'aimants permanents constituant les éléments aimantés.

L'invention a également pour objet un compteur de fluide comprenant une chambre de mesure et une enceinte renfermant un totalisateur séparées par au moins une paroi en matériau amagnétique, une turbine axiale située dans ladite chambre de mesure baignée par ledit fluide et un arbre coaxial à ladite turbine et relié mécaniquement audit totalisateur, un système d'entraînement en rotation par accouplement magnétique de la turbine axiale et de l'arbre du totalisateur comprenant au moins deux éléments aimantés axialement solidaires chacun respectivement de ladite turbine axiale et dudit arbre du totalisateur, ledit compteur de fluide comprenant un dispositif de protection dudit système d'entraînement contre un champ magnétique extérieur.
Un compteur de fluide équipé d'un tel dispositif de protection est particulièrement avantageux puisqu'il permet, d'une part, d'éviter qu'un champ magnétique extérieur ne freine la turbine à faible débit de fluide et, d'autre part, qu'un découplage ne se produise pour un débit de fluide élevé.

Selon un premier exemple de réalisation de l'invention, le compteur de fluide comprend également une paroi supplémentaire qui définit avec la paroi en contact avec l'enceinte une chambre supplémentaire disposée entre l'enceinte et la chambre de mesure et dans laquelle sont situées les deux pièces en matériau magnétique du dispositif de protection.

Selon un deuxième exemple de réalisation de l'invention, le compteur de fluide comprend également une paroi supplémentaire qui définit avec la paroi en contact avec l'enceinte une chambre supplémentaire disposée entre l'enceinte et la chambre de mesure, et les deux pièces en matériau magnétique sont séparées l'une de l'autre par la paroi en contact avec l'enceinte ce qui permet de réduire l'encombrement par rapport au dispositif de protection du premier exemple de réalisation.

Selon un troisième exemple de réalisation de l'invention, le compteur de fluide comprend également une paroi supplémentaire qui définit avec la paroi en contact avec l'enceinte une chambre supplémentaire disposée entre l'enceinte et la chambre de mesure, et les deux pièces en matériau magnétique sont séparées l'une de l'autre par la paroi supplémentaire. Avantageusement, cette configuration ainsi que celle décrite au premier exemple de réalisation permettent de ne pas remettre en cause l'implantation des différentes parties du totalisateur lors de l'installation du dispositif de protection magnétique selon l'invention.

Selon un quatrième exemple de réalisation de l'invention, le compteur de fluide comprend également une paroi supplémentaire qui définit avec la paroi en contact avec l'enceinte une chambre supplémentaire disposée entre l'enceinte et la chambre de mesure et les deux pièces en matériau magnétique sont séparées l'une de l'autre par les deux parois. Ainsi, la dimension axiale de la chambre supplémentaire peut être fortement réduite et l'on obtient un faible encombrement.

Selon un cinquième exemple de réalisation de l'invention, une seule paroi est prévue dans le compteur pour séparer l'enceinte renfermant le totalisateur de la chambre de mesure et les deux pièces en matériau magnétique du dispositif de protection sont uniquement séparées l'une de l'autre par cette paroi. Ainsi, l'une des pièces en matériau magnétique est située dans la chambre de mesure du compteur de fluide.
Il convient de noter que le dispositif de protection magnétique selon l'invention peut également s'appliquer dans un compteur d'eau où le capteur d'écoulement n'est pas une turbine.

D'autres avantages apparaîtront au cours de la description qui va suivre donnée uniquement à titre d'exemple non limitatif et faite en référence aux dessins annexés sur lesquels
- la figure 1 est une vue schématique en coupe longitudinale d'un compteur d'eau équipé d'un dispositif de protection magnétique selon l'art antérieur,
- la figure 2 est une vue schématique partielle en perspective du dispositif de protection magnétique représenté à la fig. 1,
- la figure 3 est une vue schématique en coupe longitudinale d'un compteur équipé d'un dispositif de protection magnétique selon un premier mode de réalisation de l'invention,
- la figure 4 est une vue schématique partielle agrandie du compteur d'eau équipé du dispositif de protection magnétique représenté à la fig. 3,
- la figure 5 est une vue schématique partielle d'un compteur d'eau équipé d'un dispositif de protection magnétique selon un deuxième mode de réalisation de l'invention,
- la figure 6 représente deux courbes traduisant l'allure gradient de champ magnétique au droit du système d'entraînement par accouplement magnétique en présence d'un champ magnétique extérieur, respectivement pour le dispositif de protection magnétique représenté aux figures 1 et 2 (courbe A) et pour celui représenté à la fig. 5 (courbe B),
- les figures 7 a-c sont des vues schématiques partielles de plusieurs variantes de réalisation du dispositif de protection magnétique représenté à la fig. 5.

Comme représenté à la figure 3 et désigné dans son ensemble par la référence générale 20, un compteur de fluide, plus particulièrement d'eau, comprenant un système d'entraînement par accouplement magnétique et, selon l'invention, un dispositif de protection magnétique d'un tel système contre un champ magnétique extérieur va maintenant être décrit.
Le compteur d'eau comprend une chambre de mesure 22 et une enceinte 24 disposée au dessus de celle-ci et renfermant un totalisateur, par exemple mécanique (non représenté).
Le compteur d'eau comprend également deux organes mécaniques alignés suivant un axe vertical ZZ' et aptes à tourner autour de cet axe. L'un des organes mécaniques est une turbine axiale 28 munie de pales 30 et disposée dans la chambre de mesure 22. La turbine axiale 28 est formée, d'une part, d'un moyeu central 32, sur lequel sont fixées les pales 30 et, d'autre part, à l'extrémité supérieure d'un arbre 34 coaxial audit moyeu et à l'axe de la turbine et solidaire dudit moyeu. La turbine axiale 28 repose sur un pivot 36 assujetti par une de ses extrémités dite inférieure 36a à l'une des parois de la chambre de mesure perpendiculaire à l'axe et constituant le fond 38 de celle-ci. Un logement axial 40 est ménagé dans le moyeu central 32 de la turbine afin de recevoir l'extrémité supérieure 36b du pivot 36. L'extrémité supérieure 36b du pivot est en contact avec le fond du logement axial 40 lorsque la turbine est au repos.
La chambre de mesure 22 comporte des chicanes 41 ou nervures disposées radialement par rapport à l'axe de la turbine et solidaires de la paroi supérieure 42 de ladite chambre qui est perpendiculaire à l'axe ZZ' et opposée au fond 38. Cette paroi supérieure 42, ou plateau, assure une fonction d'étanchéité entre la chambre de mesure et l'enceinte 24 et vis-à-vis de l'atmosphère extérieure et est réalisée dans un matériau amagnétique. L'eau pénètre dans la chambre de mesure par un injecteur et en ressort par un éjecteur, l'injecteur et l'éjecteur n'étant pas représentés dans le plan de coupe de la figure 3. Lorsque la turbine 28 est mise en rotation sous l'effet de la circulation d'eau dans la chambre de mesure, la turbine se soulève et le fond du logement axial 40 s'écarte de l'extrémité supérieure 36b du pivot 36.
L'autre organe mécanique est un arbre 44 coaxial à l'axe de la turbine 28 et situé dans l'enceinte 24 du totalisateur.

Le compteur d'eau comprend une chambre supplémentaire 46 disposée entre l'enceinte 24 du totalisateur et la chambre de mesure 22. Cette chambre supplémentaire 46 est délimitée par deux parois, l'une des parois étant confondue avec la paroi supérieure 42 de la chambre de mesure et l'autre paroi 48 ou embase étant située au dessus de ladite paroi 42. Cette paroi 48, réalisée dans un matériau amagnétique, sépare l'enceinte 24 de la chambre supplémentaire 46. La paroi 48 présente une première zone 48a périphérique extérieure horizontale et une seconde zone 48b centrale, déformée en direction de la chambre de mesure 22 de manière à former un logement 50 du côté de l'enceinte 24 et une partie saillante 52 du côté opposé.
La paroi supérieure 42 présente une première zone 42a périphérique extérieure formant un rebord annulaire qui s'étend parallèlement à l'axe de la turbine et est disposé contre une première portion de la première zone 48a de la paroi 48, qui est la plus éloignée de la seconde zone 48b.
La paroi supérieure 42 présente une deuxième zone 42b horizontale en forme de couronne conférant avec la seconde portion en vis-à-vis de la première zone 48a de la paroi 48 une forme annulaire à la chambre supplémentaire 46.
La paroi supérieure 42 présente également une troisième zone 42c déformée en direction de l'enceinte 24 de manière à former un logement 54 du côté de la chambre de mesure et une partie saillante 56 du côté opposé. Les parties saillantes 52 et 56 respectivement de la seconde zone 48b de la paroi 48 et de la troisième zone 42c de la paroi supérieure 42 sont en contact l'une de l'autre et ladite troisième zone 42c comporte une collerette périphérique 42d entourant ladite partie saillante 56 de la seconde zone 48b de la paroi 48.
Le compteur d'eau comprend également un système d'entraînement par accouplement magnétique 60 qui a pour but de transmettre le mouvement de rotation de la turbine axiale 28 à l'arbre 44 qui transmettra mécaniquement ce mouvement au totalisateur.
Comme représenté sur la figure 3, le système d'entraînement par accouplement magnétique 60 comporte au moins deux éléments aimantés suivant une direction axiale parallèle à l'axe ZZ'.

Chacun des éléments aimantés est solidaire de l'arbre 44 ou de la turbine axiale 28.
Le système d'accouplement magnétique 60 est par exemple formé de deux couples d'aimants permanents 62a, 62b, 64a, 64b de forme parallélépipédique. Chaque couple étant distribué sur une couronne centrée sur l'axe ZZ' et les deux aimants constituant ledit couple étant diamétralement opposés par rapport au centre de cette couronne. Les aimants permanents sont par exemple identiques.
Tel que représenté sur la figure 3, l'arbre 34 solidaire du moyeu central de la turbine 28 est pourvu à son extrémité supérieure d'un élément 66 en forme de disque disposé perpendiculairement à l'axe ZZ' conférant ainsi à la partie supérieure de la turbine une forme de T. Le disque 66 comporte deux évidements périphériques dans lequel sont installés les aimants 62a, 62b qui forment la partie menante du système d'entraînement par accouplement magnétique 60. Le disque constituant ainsi un porte-aimants est disposé dans le logement 54 formé par la paroi supérieure 42. L'arbre 44 est muni des autres aimants 64a, 64b à son extrémité qui pénètre dans le logement 50 de la paroi 48. Ces aimants 64a, 64b forment la partie menée du système d'entraînement par accouplement magnétique 60. Ainsi, les deux couples d'aimants permanents sont séparés l'un de l'autre par les parois 42 et 48.

Le système d'entraînement par accouplement magnétique est par exemple de type répulsif, ce qui signifie que chaque couple d'aimants possède une aimantation de même sens parallèle à l'axe de la turbine 28 et les aimantations des deux couples d'aimants sont en sens contraire.

Il est également possible de prévoir un système d'entraînement par accouplement magnétique de type attractif, comportant par exemple deux couronnes en vis-à-vis formées chacune de portions aimantées et pour chacune desdites couronnes deux portions aimantées disposées côte à côte ont une aimantation de sens contraire.
Dans de tels systèmes d'entraînement par accouplement magnétique, la partie menante crée un gradient de champ magnétique qui lui même engendre des efforts sur la partie menée, permettant ainsi à la partie menante d'entraîner la partie menée à une vitesse identique à la sienne.

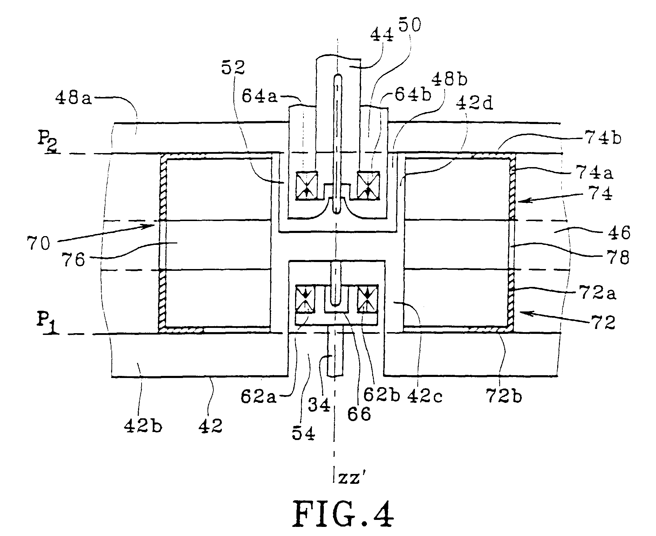

Le dispositif de protection magnétique 70 selon l'invention permet précisément de réduire le gradient de champ magnétique dû à un champ magnétique extérieur au droit du système d'entraînement par accouplement magnétique 60 du compteur d'eau afin que le mouvement et la transmission d'effort précités ne soient pas perturbés.
Selon un premier mode de réalisation représenté aux figures 3 et 4, le dispositif de protection magnétique comprend deux pièces en matériau magnétique 72, 74 disposées autour du système d'entraînement par accouplement magnétique 60 dans l'espace de forme annulaire de la chambre supplémentaire 46. Les deux pièces 72, 74 sont identiques et présentent une symétrie de révolution axiale.
Chaque pièce 72, 74 possède une extension radiale minimale qui est supérieure à l'extension radiale des aimants permanents 62a, 62b, 64a, 64b. Comme représenté sur la figure 4, chaque pièce 72, 74 est formée de deux portions: une première portion 72a, 74a a une forme cylindrique qui s'étend parallèlement à l'axe ZZ' et une seconde portion 72b, 74b de forme annulaire s'étend radialement en direction de l'axe ZZ' à partir d'une des extrémités axiales de ladite première portion.
Cette seconde portion de forme annulaire 72b, 74b forme un rebord.
Dans le dispositif de protection magnétique selon l'invention, les deux pièces 72, 74 sont décalées axialement, c'est-à-dire qu'elles ménagent entre elles un espace axial 76 situé dans l'espace annulaire de la chambre supplémentaire 46.
Sur la figure 4, sont représentés deux plans imaginaires P1 et P2, parallèles entre eux et perpendiculaires à l'axe ZZ'.
Le plan P1 tangente la face inférieure du rebord 72b de la pièce 72 et le plan P2 tangente la face supérieure du rebord 74b de la pièce 74.
La face supérieure de la paroi 42 est contenue dans le plan P1 et la face inférieure de la paroi 48 est contenue dans le plan P2.
Chaque pièce 72, 74 est ainsi respectivement en contact avec la face supérieure de la paroi 42 et la face inférieure de la paroi 48.
Les deux pièces en matériau magnétique 72, 74 ont une extension axiale telle qu'elles encadrent axialement les deux couples d'aimants 62a, 62b et 64a, 64b et les plans P1 et P2 ne tangentent pas respectivement les faces inférieures des aimants 62a, 62b et supérieures des aimants 64a, 64b comme dans le dispositif de protection de l'art antérieur.
Pour maintenir l'espace axial 76 entre ces deux pièces 72, 74, il est par exemple prévu de disposer une entretoise 78 de forme cylindrique réalisée en matériau amagnétique entre les premières portions 72a, 74a de chaque pièce 72, 74.
Pour maintenir centrées les pièces 72, 74, il est possible de prévoir plusieurs butées 80 disposées radialement sur la face supérieure (resp. inférieure) de la paroi 42 (resp. de la paroi 48) ainsi que représenté sur la figure 3.
Il est également possible de solidariser par collage chaque pièce 72, 74 par son rebord annulaire respectif 72b, 74b à la face supérieure (resp. inférieure) de la paroi 42 (resp. 48) pour éviter les éléments supplémentaires que sont l'entretoise 78 et les butées 80.
Les aimants 62a, 62b, 64a, 64b constituant le système d'entraînement par accouplement magnétique du compteur d'eau sont, du fait de l'espace axial entre les deux pièces 72, 74, situés dans une zone où le gradient créé par le champ magnétique extérieur est considérablement réduit.
En outre, les aimants sont également protégés vis à vis de l'intensité d'un champ magnétique extérieur.
En adaptant l'extension axiale de l'espace axial 76 ainsi que l'extension axiale des pièces 72, 74 au système d'entraînement par accouplement magnétique, il est donc possible d'améliorer l'efficacité du dispositif de protection magnétique selon l'invention en annulant le gradient de champ magnétique dans la zone où est située ledit système d'entrainement par accouplement magnétique.
Les deux pièces en matériau magnétique sont dimensionnées en fonction de l'intensité du champ magnétique créé par les aimants permanents afin de réduire autant que possible les interactions magnétiques entre lesdites pièces et lesdits aimants.
Leur dimensionnement impose alors un positionnement spatial des pièces par rapport aux aimants et il est judicieux de placer les pièces en matériau magnétique à une distance telle que le champ magnétique créé au droit desdites pièces par les aimants ait une intensité inférieure ou égale à 10⁻³Tesla.

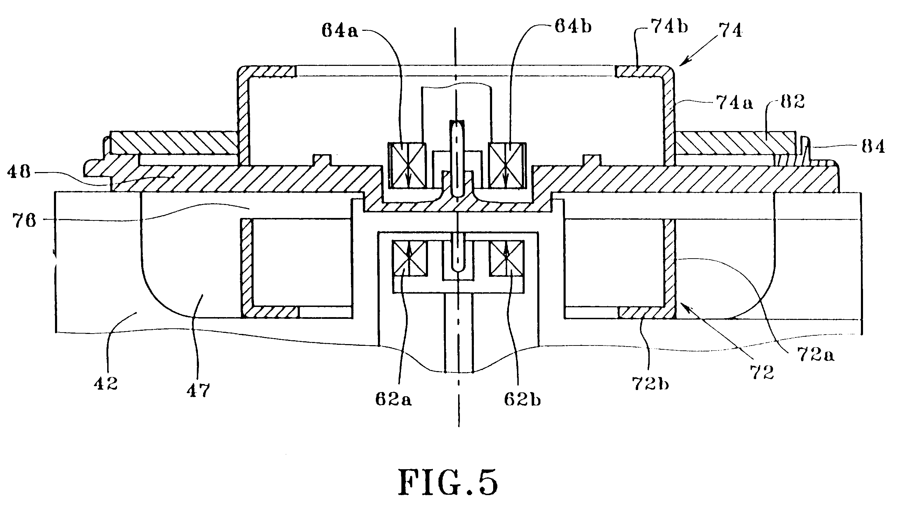

Si les pièces sont trop éloignées du système d'entraînement par accouplement magnétique et donc plus proches des parois extérieures du compteur, il existe un risque de saturation du matériau magnétique constituant les pièces 72, 74 et par conséquent une perte d'efficacité du dispositif de protection magnétique en raison de sa proximité vis-à-vis de la source extérieure de champ magnétique.
Il convient de remarquer que lorsque le système d'entraînement par accouplement magnétique est de type répulsif, les lignes de champ magnétique ont une extension radiale et axiale plus grande que dans le cas d'un système de type attractif.
Aussi, le dispositif de protection magnétique d'un système d'entraînement par accouplement magnétique de type répulsif sera plus éloigné que celui d'un système de type attractif.
Un deuxième mode de réalisation de l'invention est représenté à la figure 5. Le compteur d'eau partiellement représenté sur cette figure comprend une chambre supplémentaire 47 de forme annulaire délimitée par les deux parois 42 et 48.
Tout ce qui a été dit précédemment en référence à la description du premier mode de réalisation reste valable et ne sera donc pas répété ci-après, les références aux figures restant inchangées pour les éléments communs.
Par contre, dans ce mode de réalisation, les deux pièces en matériau magnétique 72, 74 sont respectivement situées de part et d'autre de la paroi en matériau amagnétique 48.
Une des pièces 72 est logée dans la chambre supplémentaire 47 et est par exemple fixée par collage à la face supérieure de la paroi 42 partiellement représentée.
L'autre pièce 74, quant à elle, est disposée dans l'enceinte 24 du totalisateur et est en contact avec la face supérieure de la paroi 48 par l'extrémité libre de sa première portion 74a.
La pièce 74 est maintenue radialement par une collerette 82 entourant ladite pièce 74 et prenant appui sur une butée périphérique 84.
Ainsi disposées, les pièces 72, 74 ménagent entre elles un espace axial 76 et ont une extension axiale telle qu'elles encadrent axialement les aimants permanents 62a, 62b, 64a, 64b du système d'entraînement par accouplement magnétique.

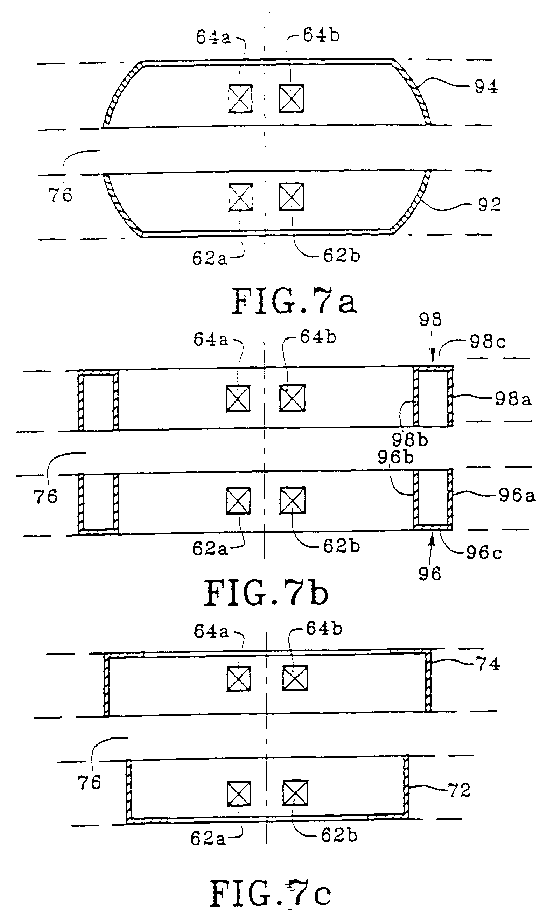

Comme représenté sur la figure 5, les aimants supérieurs 64a et 64b sont plus grands que les aimants inférieurs 62a, 62b et pénètrent partiellement dans l'espace axial 76 alors que lesdits aimants 62a, 62b restent en dehors de cet espace axial. La zone dans laquelle se situent les aimants correspond à une zone à gradient de champ magnétique réduit ce qui n'affecte pas les interactions magnétiques entre lesdits aimants en présence d'un champ magnétique extérieur.
Cette disposition des pièces du dispositif de protection magnétique est particulièrement avantageuse par rapport au dispositif de protection magnétique de l'art antérieur représenté sur les figures 1 et 2 étant donné que l'extension axiale de la chambre supplémentaire 47 est réduite et que l'on obtient ainsi un gain en compacité.
A titre d'exemple, le moment magnétique des aimants supérieurs 64a, 64b est de 16.10⁻⁹Tm⁻³, celui des aimants inférieurs 62a, 62b est 11.10⁻⁹Tm⁻³. Les pièces 72, 74 sont réalisées en fer doux.
Le diamètre extérieur des pièces 72, 74 est de 38 mm, leur diamètre intérieur est de 28mm et ces pièces ont une épaisseur de 1mm. La première portion 72a, 74a de chacune des pièces a une extension axiale ou hauteur de 8,5mm.
Chaque aimant a un même diamètre et est situé à une distance de 8,25mm du diamètre interne du rebord annulaire 72b, 74b de chaque pièce.
La face supérieure de chaque aimant 64, 64b est située à une distance de 5,5mm de la face inférieure du rebord annulaire 74b.
La face inférieure de chaque aimant 62 est située à une distance de 2,7mm de la face inférieure du rebord annulaire 72b.
Dans cette disposition, le champ magnétique créé par les aimants 64a, 64b au droit de la pièce 74 a une intensité de 10⁻³Tesla, ce qui évite toute interaction magnétique.

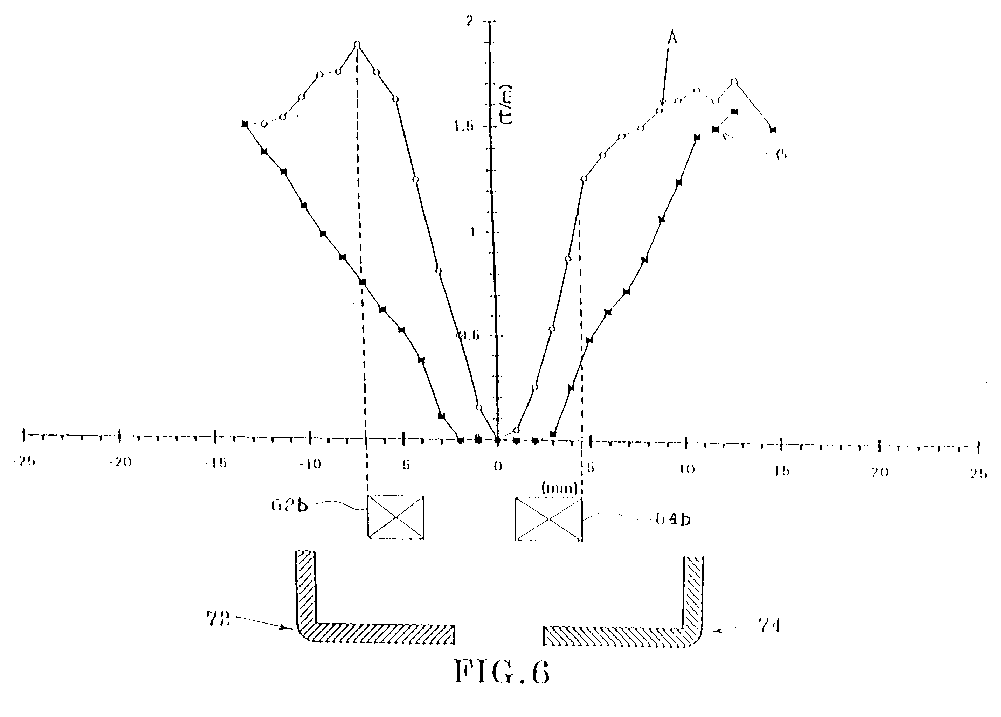

La figure 6 permet de comparer l'efficacité du dispositif de protection magnétique selon l'invention, tel que représenté à la figure 5, par rapport au dispositif de protection magnétique selon l'art antérieur, tel que représenté aux figures 1 et 2.
Sur cette figure, la courbe A représente l'allure du gradient de champ magnétique dans la zone où est situé le système d'entraînement par accouplement magnétique d'un compteur d'eau équipé du dispositif de protection magnétique des figures 1 et 2 en présence d'un champ magnétique extérieur et la courbe B représente l'allure du gradient de champ magnétique dans la zone où est situé le système d'entraînement par accouplement magnétique du compteur d'eau équipé du dispositif de protection magnétique de la figure 5 en présence du même champ magnétique extérieur.
Ainsi, le système d'entraînement par accouplement magnétique pourvu du dispositif de protection magnétique représenté à la figure 5 est situé dans une zone (comprise entre les traits verticaux parallèles en pointillés) où le gradient de champ magnétique (courbe B) est considérablement réduit par comparaison avec le gradient de champ magnétique (courbe A) obtenu au moyen du dispositif de protection magnétique de l'art antérieur (figures 1 et 2). Seuls les aimants 62b et 64b de l'entraînement magnétique ainsi qu'une partie des pièces 72 et 74 du dispositif de protection magnétique sont représentés sur la figure 6. Le système d'entraînement par accouplement magnétique protégé par le dispositif de protection magnétique représenté à la figure 5 sera par conséquent peu sensible aux perturbations magnétiques extérieures.
Selon une variante de l'invention représentée à la figure 7a où seules les pièces en matériau magnétique 92, 94 et le système d'entraînement par accouplement magnétique sont représentés, chaque pièce en matériau magnétique a une forme de couronne hémisphérique. Les deux pièces 92, 94 identiques ont une extension axiale telle qu'elles encadrent axialement le système d'entraînement par accouplement magnétique.
La figure 7b représente une autre variante de réalisation du dispositif de protection magnétique selon l'invention.
Sur cette figure, les deux pièces 96,98 en matériau magnétique sont identiques. Chaque pièce 96 (resp.98) comprend deux portions cylindriques 96a, 96b (resp. 98a, 98b) parallèles, de même extension axiale et coaxiales ainsi qu'une troisième portion 96c (resp.98c) annulaire qui réunit lesdites portions cylindriques par une de leurs extrémités la plus éloignée de l'espace axial 76.
Localement, chaque pièce 96, 98 a une section dans un plan contenant l'axe ZZ' qui a une forme en U.

Avec une telle disposition, il est préférable d'éloigner les pièces 96, 98 des aimants 62a, 62b, 64a, 64b pour éviter de trop fortes interactions magnétiques.
La figure 7c représente encore une autre variante de réalisation utilisant les pièces en matériau magnétique 72, 74 décrites en référence à la figure 4 mais dans laquelle lesdites pièces ont des dimensions différentes. Comme représenté sur cette figure, la pièce 72 a une extension radiale inférieure à celle de la pièce 74.
La configuration peut également être inversée: la pièce 74 a alors une extension radiale inférieure à celle de la pièce 72.
De telles configurations dissymétriques peuvent être utilisées lorsque les aimants ont des tailles différentes et notamment pour un système d'entraînement par accouplement magnétique de type attractif constitué par exemple de couronnes aimantées situées en vis-à-vis.
On peut également prévoir d'utiliser deux pièces en matériau magnétique de forme totalement différente en combinant par exemple, de manière non limitative, les formes décrites en référence aux figures 4, 5 et 7a-c ainsi que leurs dimensions.
Il est également possible d'utiliser d'autres formes de pièces en matériau magnétique non décrites dans cet exposé pour constituer le dispositif de protection magnétique selon l'invention.

## Revendications

1. Dispositif de protection (70) contre un champ magnétique extérieur d'un système d'entraînement (60) en rotation autour d'un axe de deux organes mécaniques (28,44) par accouplement magnétique, ledit système d'entraînement comportant au moins deux éléments (62a, 62b ,64a, 64b) aimantés axialement, solidaires chacun d'un desdits organes mécaniques et destinés à interagir l'un avec l'autre, lesdits éléments aimantés étant décalés axialement, ledit dispositif comprenant deux pièces (72,74; 92, 94; 96, 98) en matériau magnétique entourant ledit système d'entraînement, chacune desdites pièces ayant une extension radiale minimale supérieure à l'extension radiale desdits éléments aimantés, caractérisé en ce que les deux pièces (72, 74; 92, 94; 96, 98) en matériau magnétique ménagent entre elles un espace (76) axial afin de réduire le gradient de champ magnétique extérieur au droit du système d'entraînement et ont une extension axiale telle qu'elles encadrent axialement ledit système d'entraînement.

2. Dispositif selon la revendication 1, caractérisé en ce que les pièces (72, 74; 92, 94; 96, 98) en matériau magnétique sont situées à une distance des éléments aimantés (62a, 62b ,64a, 64b) du système d'entraînement (60) telle que ceux-ci créent au droit desdites pièces un champ magnétique d'intensité inférieure à 10⁻³Tesla.

3. Dispositif selon la revendication 1 ou 2, caractérisé en ce que chaque pièce (72, 74; 92, 94; 96, 98) en matériau magnétique présente une symétrie de révolution axiale.

4. Dispositif selon l'une des revendications 1 à 3, caractérisé en ce que au moins une (92) des pièces en matériau magnétique a une forme de couronne hémisphérique.

5. Dispositif selon l'une des revendications 1 à 3, caractérisé en ce que au moins une (72) des pièces en matériau magnétique comporte, d'une part, une première portion (72a) de forme cylindrique s'étendant axialement et, d'autre part, une deuxième portion (72b) annulaire s'étendant radialement en direction du système d'entraînement (60) à partir d'une extrémité axiale de ladite première portion qui est la plus éloignée de l'espace axial (76).

6. Dispositif selon l'une des revendications 1 à 3, caractérisé en ce que au moins une (96) des pièces en matériau magnétique comprend deux portions (96a, 96b) cylindriques parallèles s'étendant axialement et une troisième portion (96c) annulaire radiale réunissant lesdites portions cylindriques par une de leurs extrémités la plus éloignée de l'espace axial (76).

7. Dispositif selon l'une des revendications 1 à 6, caractérisé en ce que les deux pièces en matériau magnétique sont différentes l'une de l'autre.

8. Dispositif selon l'une des revendications 1 à 6, caractérisé en ce que les deux pièces en matériau magnétique sont identiques.

9. Dispositif selon l'une des revendications 1 à 8, caractérisé en ce que le système d'entraînement (60) par accouplement magnétique est de type attractif.

10. Dispositif selon l'une des revendications 1 à 8, caractérisé en ce que le système d'entraînement (60) par accouplement magnétique est de type répulsif.

11. Dispositif selon l'une des revendications 1 à 10, caractérisé en ce que le système d'entraînement (60) par accouplement magnétique comporte deux couples d'aimants permanents (62a, 62b, 64a, 64b) constituant les éléments aimantés.

12. Compteur de fluide (20) comprenant une chambre de mesure (22) et une enceinte (24) renfermant un totalisateur séparées par au moins une paroi (48) en matériau amagnétique, une turbine axiale (28) située dans ladite chambre de mesure (22) baignée par ledit fluide et un arbre (44) coaxial à ladite turbine (28) et relié mécaniquement audit totalisateur, un système d'entraînement (60) en rotation par accouplement magnétique de la turbine axiale (28) et de l'arbre (44) du totalisateur comprenant au moins deux éléments (62, 64) aimantés axialement solidaires chacun respectivement de ladite turbine axiale (28) et dudit arbre (44) du totalisateur, caractérisé en ce que ledit compteur de fluide comprend un dispositif de protection (70) dudit système d'entraînement contre un champ magnétique extérieur selon l'une des revendications 1 à 11.

13. Compteur de fluide selon la revendication 12, caractérisé en ce qu'il comprend également une paroi supplémentaire (42) définissant avec la paroi (48) en contact avec l'enceinte (24) une chambre supplémentaire (46, 47) disposée entre l'enceinte (24) et la chambre de mesure (22).

14. Compteur de fluide selon les revendications 12 et 13, caractérisé en ce que les deux pièces (72, 74; 92, 94; 96, 98) en matériau magnétique du dispositif de protection (70) sont situées dans la chambre supplémentaire (46).

15. Compteur de fluide selon la revendication 12 ou 13, caractérisé en ce que les deux pièces (72, 74; 92, 94; 96, 98) en matériau magnétique du dispositif de protection (70) sont séparées l'une de l'autre par l'une des parois (42, 48).

16. Compteur de fluide selon les revendications 12 et 13, caractérisé en ce que les deux pièces (72, 74; 92, 94; 96, 98) en matériau magnétique du dispositif de protection (70) sont séparées l'une de l'autre par les deux parois (42, 48).

## Patentansprüche

1. Vorrichtung (70) zum Schutz vor einem äußeren Magnetfeld für ein System (60) zum rotatorischen Antrieb zweier mechanischer Elemente (28, 40) um eine Achse mittels magnetischer Kopplung, wobei das Antriebssystem wenigstens zwei axial magnetisierte Elemente (62a, 62b, 64a, 64b) enthält, die jeweils mit einem der mechanischen Elemente verbunden und dazu vorgesehen sind, miteinander in Wechselwirkung zu treten, wobei die magnetisierten Elemente axial versetzt sind, wobei die Vorrichtung zwei Teile (72, 74; 92, 94; 96, 98) aus magnetischem Material enthält, die das Antriebssystem umgeben, wobei jedes der Teile eine minimale radiale Ausdehnung besitzt, die größer als die radiale Ausdehnung der magnetisierten Elemente ist, dadurch gekennzeichnet, daß die beiden Teile (72, 74; 92, 94; 96, 98) aus magnetischem Material zwischen sich einen axialen Raum (76) bilden, um den Gradienten des äußeren Magnetfeldes in Richtung des Antriebssystems zu reduzieren, und eine axiale Erstreckung besitzen, derart, daß sie das Antriebssystem axial überspannen.

2. Vorrichtung nach Anspruch 1, dadurch gekennzeichnet, daß die Teile (72, 74; 92, 94; 96, 98) aus magnetischem Material sich von den magnetisierten Elementen (62a, 62b, 64a, 64b) des Antriebssystems (60) in einem Abstand befinden, so daß diese in Richtung der Teile ein Magnetfeld erzeugen, dessen Intensität kleiner als 10⁻³ Tesla ist.

3. Vorrichtung nach Anspruch 1 oder 2, dadurch gekennzeichnet, daß jedes Teil (72, 74; 92, 94; 96, 98) aus magnetischem Material eine axiale Rotationssymmetrie aufweist.

4. Vorrichtung nach einem der Ansprüche 1 bis 3, dadurch gekennzeichnet, daß wenigstens eines (92) der Teile aus magnetischem Material die Form eines halbkugelförmigen Kranzes besitzt.

5. Vorrichtung nach einem der Ansprüche 1 bis 3, dadurch gekennzeichnet, daß wenigstens eines (72) der Teile aus magnetischem Material einerseits einen ersten Abschnitt (72a) mit zylindrischer Form, der sich axial erstreckt, und andererseits einen ringförmigen zweiten Abschnitt (72b) enthält, der sich von einem axialen Ende des ersten Abschnitts, das von dem axialen Raum (76) am weitesten entfernt ist, radial in Richtung des Antriebssystems (60) erstreckt.

6. Vorrichtung nach einem der Ansprüche 1 bis 3, dadurch gekennzeichnet, daß wenigstens eines (96) der Teile aus magnetischem Material zwei parallele zylindrische Abschnitte (96a, 96b), die sich axial erstrecken, und einen radialen, ringförmigen dritten Abschnitt (96c) enthält, der die zylindrischen Abschnitte über eines ihrer Enden, das vom axialen Raum (76) am weitesten entfernt ist, miteinander verbindet.

7. Vorrichtung nach einem der Ansprüche 1 bis 6, dadurch gekennzeichnet, daß die beiden Teile aus magnetischem Material voneinander verschieden sind.

8. Vorrichtung nach einem der Ansprüche 1 bis 6, dadurch gekennzeichnet, daß die beiden Teile aus magnetischem Material völlig gleich sind.

9. Vorrichtung nach einem der Ansprüche 1 bis 8, dadurch gekennzeichnet, daß das System (60) für einen Antrieb mittels magnetischer Kopplung vom anziehenden Typ ist.

10. Vorrichtung nach einem der Ansprüche 1 bis 8, dadurch gekennzeichnet, daß das System (60) für einen Antrieb mittels magnetischer Kopplung vom abstoßenden Typ ist.

11. Vorrichtung nach einem der Ansprüche 1 bis 10, dadurch gekennzeichnet, daß das System (60) für einen Antrieb mittels magnetischer Kopplung zwei Paare von Permanentmagneten (62a, 62b, 64a, 64b) enthält, die die magnetisierten Elemente bilden.

12. Fluidzähler (20), mit einer Meßkammer (22) und einem einen Zähler einschließenden Raum (24), die durch wenigstens eine Wand (48) aus nichtmagnetischem Material getrennt sind, einer axialen Turbine (28), die sich in der Meßkammer (22) befindet und durch das Fluid bespült wird, und einer Welle (44), die zur Turbine (28) koaxial ist und mit dem Zähler mechanisch verbunden ist, wobei ein System (60) für einen rotatorischen Antrieb mittels magnetischer Kopplung für die axiale Turbine (28) und die Welle (44) des Zählers wenigstens zwei axial magnetisierte Elemente (62, 64) enthält, die mit der axialen Turbine (28) bzw. mit der Welle (44) des Zählers verbunden sind, dadurch gekennzeichnet, daß der Fluidzähler eine Vorrichtung (70) zum Schutz des Antriebssystems vor einem äußeren Magnetfeld nach einem der Ansprüche 1 bis 11 enthält.

13. Fluidzähler nach Anspruch 12, dadurch gekennzeichnet, daß er außerdem eine zusätzliche Wand (42) enthält, die mit der mit dem Raum (24) in Kontakt befindlichen Wand (48) eine zusätzliche Kammer (46, 47) bildet, die zwischen dem Raum (24) und der Meßkammer (22) angeordnet ist.

14. Fluidzähler nach den Ansprüchen 12 und 13, dadurch gekennzeichnet, daß sich die zwei Teile (72, 74; 92, 94; 96, 98) aus magnetischem Material der Schutzvorrichtung (70) in der zusätzlichen Kammer (46) befinden.

15. Fluidzähler nach Anspruch 12 oder 13, dadurch gekennzeichnet, daß die zwei Teile (72, 74; 92, 94; 96, 98) aus magnetischem Material der Schutzvorrichtung (70) voneinander durch eine der Wände (42, 48) getrennt sind.

16. Fluidzähler nach den Ansprüchen 12 und 13, dadurch gekennzeichnet, daß die zwei Teile (72, 74; 92, 94; 96, 98) aus magnetischem Material der Schutzvorrichtung (70) voneinander durch die zwei Wände (42, 48) getrennt sind.

## Claims

1. A protection device (70) for providing a drive system (60) for imparting rotary drive between two mechanical members (28, 44) about an axis by magnetic coupling with protection from an external magnetic field, said drive system including at least two axially magnetized elements (62a, 62b, 64a, 64b) each secured to at least one of said mechanical members and designed to interact with one another, said magnetized elements being axially offset, said protection device comprising two parts (72, 74; 92, 94; 96, 98) of magnetic material surrounding said drive system, each of said parts having a minimum radial extent greater than the radial extent of said magnetized elements, characterized in that the two parts (72, 74; 92, 94; 96, 98) of magnetic material leave between them an axial space (76) so as to reduce the gradient of the external magnetic field at the drive system, and have an axial extent such that they encompass said drive system axially.

2. A device according to claim 1, characterized in that the parts (72, 74; 92, 94; 96, 98) made of magnetic material are situated at a distance from the magnetized elements (62a, 62b, 64a, 64b) of the drive system (60) such that the magnetized elements create a magnetic field at said parts of an intensity that is less than 10⁻³ Tesla.

3. A device according to claim 1 or 2, characterized in that each part (72, 74; 92, 94; 96, 98) of magnetic material is circularly symmetrical about the axis.

4. A device according to any one of claims 1 to 3, characterized in that at least one of the parts (92) made of magnetic material is in the form of a hemispherical ring.

5. A device according to any one of claims 1 to 3, characterized in that at least one of the parts (72) of magnetic material includes both an axially-extending first portion (72a) that is cylindrical in shape, and a second portion (72b) that is annular in shape, extending radially towards the drive system (60) from that one of the axial ends of the first portion which is further from the axial space (76).

6. A device according to any one of claims 1 to 3, characterized in that at least one of the parts (96) of magnetic material comprises two parallel cylindrical portions (96a, 96b) extending axially together with a radially annular third portion (96c) uniting said cylindrical portions via that one of their respective ends that is further from the axial space (76).

7. A device according to any one of claims 1 to 6, characterized in that the two parts made of magnetic material are different from each other.

8. A device according to any one of claims 1 to 6, characterized in that the two parts made of magnetic material are identical.

9. A device according to any one of claims 1 to 8, characterized in that the magnetic coupling drive system (60) is of the attractive type.

10. A device according to any one of claims 1 to 8, characterized in that the magnetic coupling drive system (60) is of the repulsive type.

11. A device according to any one of claims 1 to 10, characterized in that the magnetic coupling drive system (60) includes two pairs of permanent magnets (62a, 62b, 64a, 64b) constituting the magnetized elements.

12. A fluid meter (20) comprising a measurement chamber (22) and an enclosure (24) containing a totalizing counter separated by at least one wall (48) made of nonmagnetic material, an axial spinner (28) situated in said measurement chamber (22) being immersed in said fluid, and a shaft (44) in coaxial alignment with said spinner (28) and mechanically connected to said totalizing counter, a rotary drive system (60) magnetically coupling together the axial spinner (28) and the shaft (44) of the counter and comprising at least two axially magnetized elements (62, 64) secured respectively to said axial spinner (28) and to said shaft (44) of the totalizing counter, characterized in that said fluid meter includes a protection device (70) for protecting said drive system against an external magnetic field and according to any one of claims 1 to 11.

13. A fluid meter according to claim 12, characterized in that it also includes an additional wall (42) co-operating with the wall (48) in contact with the enclosure (24) to define an additional chamber (46, 47) disposed between the enclosure (24) and the measurement chamber (22).

14. A fluid meter according to claims 12 and 13, characterized in that the two parts (72, 74; 92, 94; 96, 98) made of magnetic material of the protection device (70) are situated in the additional chamber (46).

15. A fluid meter according to claim 12 or 13, characterized in that the two parts (72, 74; 92, 94; 96, 98) made of magnetic material of the protection device are separated from each other by one of the walls (42, 48).

16. A fluid meter according to claims 12 and 13, characterized in that the two parts (72, 74; 92, 94; 96, 98) made of magnetic material of the protection device (70) are separated from each other by both walls (42, 48).
